# EUROPEAN PATENT APPLICATION

(11) **EP 1 083 364 A1**
(43) Date of publication of application: **14.03.2001**
(21) Application number: 00907951.8
(22) Date of filing: 09.03.2000
(51) Int. Cl.: F16F 15/16

(54) **FLYWHEEL**

(30) Priority: 29.03.1999 JP 8723699
(71) Applicant: UNISIA JECS CORPORATION, Atsugi-shi, Kanagawa-ken 243-8510 (JP)
(72) Inventor: SHIBATA, Daisuke, Atsugi-shi Kanagawa 243-8510 (JP); INOUE, Atsushi, Atsugi-shi Kanagawa 243-8510 (JP)
(74) Representative: Hager, Thomas J.
(86) International application number: JP0001408
(87) International publication number: WO0058643

(57) **Abstract**

A first inertial body 2 and a second inertial body 5 rotatable relative to this input member 2 are coupled by a plurality of dampers 6 arranged in a circumferential direction. A boss member 17 connected with the second inertial body 5 is installed rotatably with respect to the first inertial body 2. In the first inertial body 2 and the boss member 17, respectively, there are provided, in the manner of correspondence to the dampers 6, shafts 43 and 37 extending approximately in the same axial direction. The shafts 43 and 37 are coupled, respectively, with both ends of the damper. The second inertial body 5 is connected with the boss member 17. Thus, it is possible to provide a flywheel capable of facilitating an assembly process of the dampers.

## Description

### Technical Field

The present invention relates to a flywheel advantageously used in an internal combustion engine, and in particular to a flywheel including two inertial bodies coupled by dampers.

### Background Art

A flywheel is used in an internal combustion engine to smooth the rotation of the rotation axis system suffering large torque fluctuation, and to prevent vibration. As a flywheel of this kind, a Japanese Patent *Kokai* Publication No. H3-219146 discloses a flywheel in which a first inertial body secured to a driving shaft and a second inertial body rotatable relative to the first inertial body are coupled by a plurality of dampers arranged in the circumferential direction.

Each damper is provided with a damping device for providing resistance to the relative rotation between the first and second inertial bodies, and a spring member for returning the first and second inertial bodies from a relative rotational position to a neutral position. As the damping device, a dashpot is used.

The conventional flywheel is arranged to prevent vibrations by resisting the relative rotation with the dashpot as a damping device and the spring member when the first and second inertial bodies rotate relatively from the neutral position, or return to the neutral position from the relative rotational position. In other words, as the working fluid in the dashpot escapes through an orifice provided in the piston, the pressure difference produced on both sides of the piston provides motion resistance, and the force of the spring member acts to absorb vibrations.

In this conventional flywheel, both ends of the dampers are directly coupled to the first and second inertial bodies, respectively. In other words, the damper's end located on the radial inner side is secured to the first inertial body by a bolt, and the damper's end located on the radial outer side is secured to the second inertial body by a bolt.

Therefore, the bolt securing one end of the damper to the first inertial body and the bolt securing the other end to the second inertial body are oriented in opposite directions, so that the operation for installing the dampers can become difficult.

### Disclosure of the Invention

The present invention is devised in consideration of the above-mentioned conventional situation, and aims at providing a flywheel in which dampers can be readily installed.

The invention as recited in Claim 1 is arranged so that, in a flywheel wherein a first inertial body and a second inertial body rotatable relative to the first inertial body are coupled by a plurality of dampers arranged in a circumferential direction, there is attached rotatably, to one of the first and second inertial bodies, a boss member connected to the other; there are provided, respectively, in either the first inertial body or the second inertial body and the boss member, for each damper, shafts extending approximately in the same axial direction, the shafts are connected, respectively, with both ends of the damper; and the other of the first and second inertial bodies is connected with the boss member.

The invention as recited in Claim 2 is arranged so that, in the construction of the invention recited in Claim 1, the dampers each comprise an damping device for providing resistance to the relative rotation between the first and second inertial bodies, and a spring member for returning the first and second inertial bodies from a relative rotational position to a neutral position, the damping device comprises a cylinder coupled with one of the shafts, filled with working fluid, and sealed at one end, a piston rod projected extractibly through the other end of the cylinder in a sealing manner and coupled with the other shaft, a slidable piston coupled to the piston rod, and arranged to divide the inside of the cylinder into two fluid chambers, and a damping force generating means provided as adjunct to the piston, and the spring member is disposed in the cylinder.

In this structure, one of the first and second inertial bodies, for example the first inertial body, is coupled to an input member, and the other, for example the second inertial body, is coupled to an output member. The torque inputted from the input member into the first inertial body is transferred through the dampers to the second inertial body, and outputted to the output member. At that time, the dampers act to prevent vibrations.

In detail, according to the invention as recited in Claim 2, the spring member acts to absorb vibrations, and the damping device performs damping operation, so that vibrations superimposed on the input torque can be absorbed and damped.

The dampers for coupling the first and second inertial bodies are installed through the shafts provided, respectively, on either the first inertial body or the second inertial body and the boss member.

The shafts provided, respectively, on either the first or the second inertial body and the boss member extend approximately in the same axial direction, so that the dampers are readily mounted to the shafts from one direction.

After the connection of the ends of each damper, respectively, to the shafts, the first and second inertial bodies are coupled with the dampers by connecting the other of the first and second inertial bodies to the boss member.

In this way, the dampers are easily attached to the first and second inertial bodies.

It is therefore possible to obtain a flywheel in which dampers can be readily installed.

In the invention as recited in Claim 2, each damper comprises the damping device for providing resistance to the relative rotation between the first and second inertial bodies, and the spring member for returning the first and second inertial bodies from the relative rotational position to the neutral position, the damping device comprises the cylinder coupled with one of the shafts, filled with working fluid, and sealed at one end, the piston rod projected extractibly through the other end of the cylinder in a sealing manner and coupled with the other shaft, the slidable piston coupled to the piston rod, and arranged to divide the inside of the cylinder into two fluid chambers, and the damping force generating means provided as adjunct to the piston, and the spring member is disposed in the cylinder. Therefore, the adjustment of the damping force is easy and the construction is simple.

### Brief Description of the Drawings

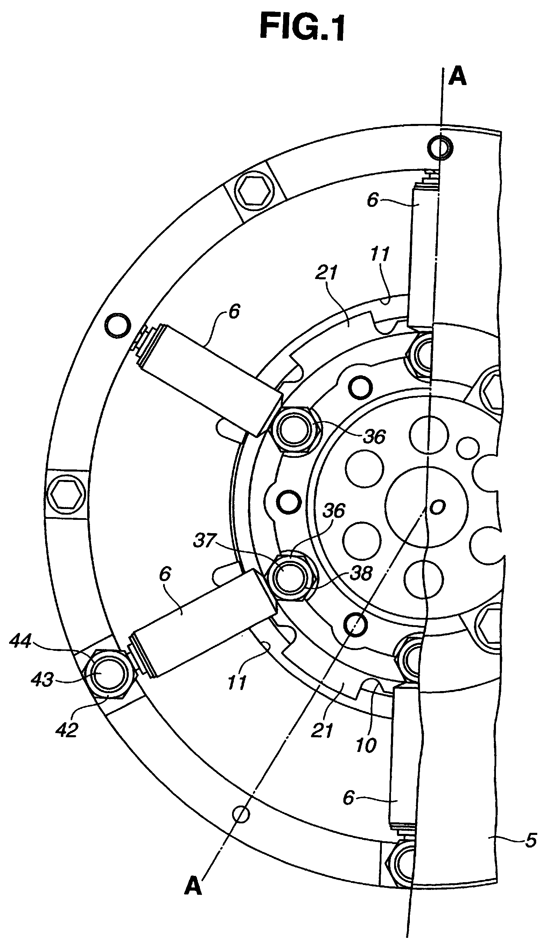

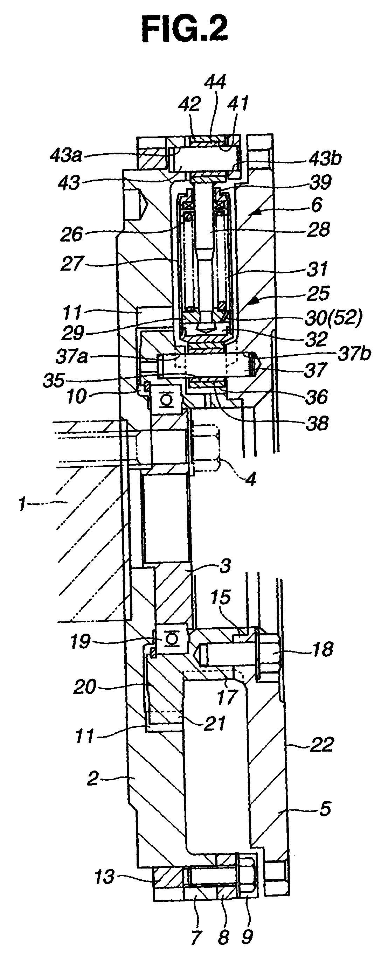

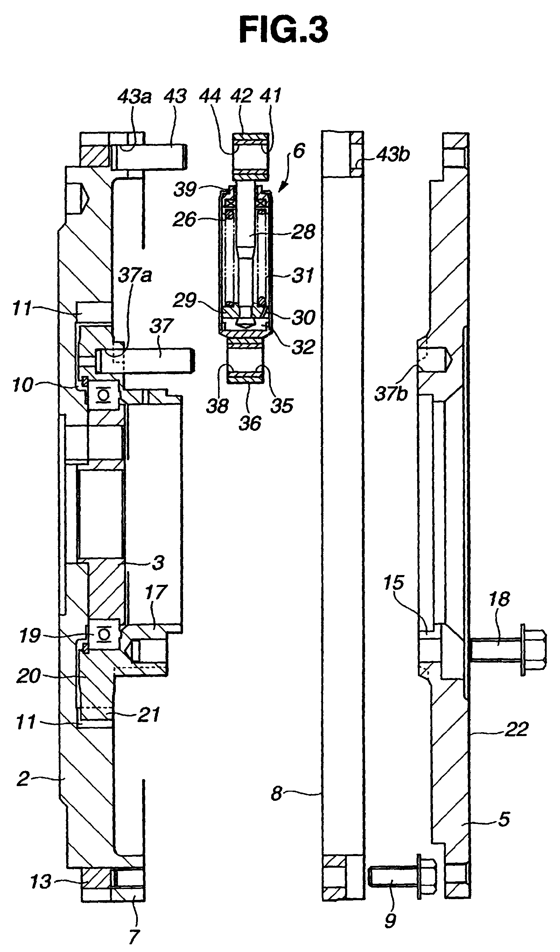

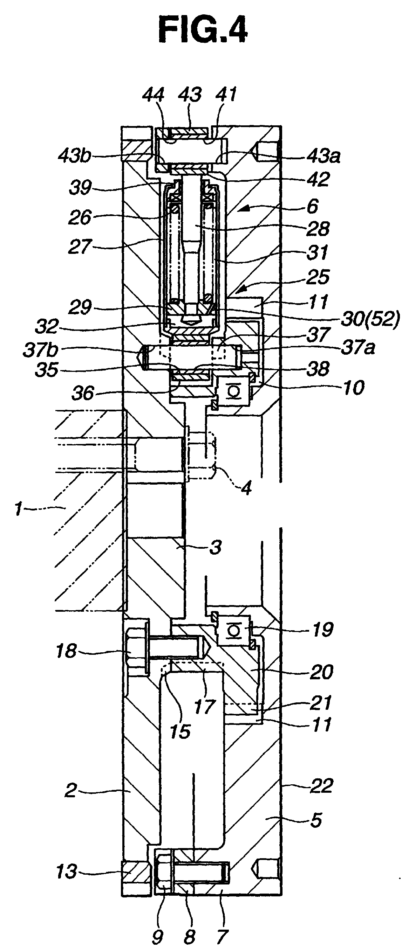

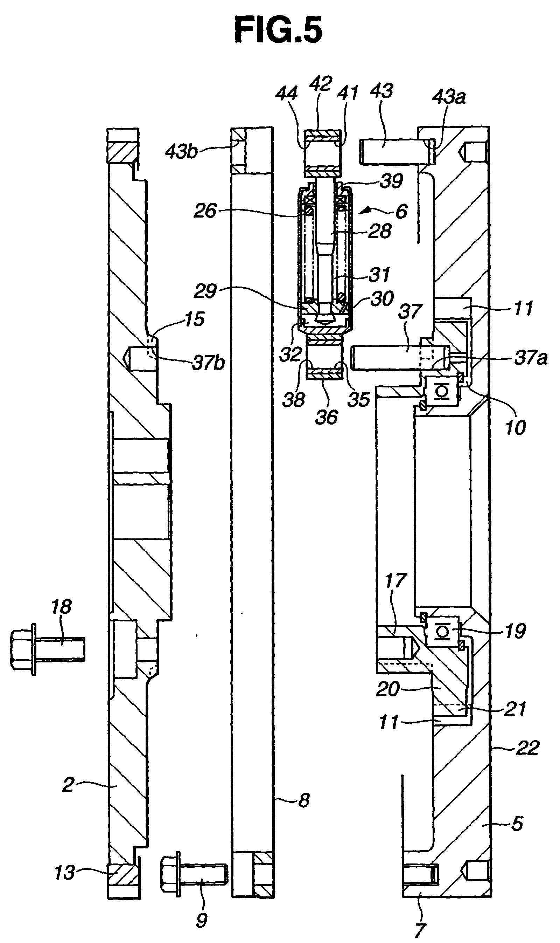

FIG. 1 is a partial plan view showing a flywheel showing an embodiment of the invention with a part cut away. FIG. 2 is a sectional view taken across a line A-O-A shown in FIG. 1. FIG. 3 is a view showing the flywheel shown in Fig. 2 in an exploded state. FIG. 4 is a view similar to FIG. 2, but showing another embodiment of the invention. FIG. 5 is a view showing the flywheel shown in FIG. 4 in an exploded state.

### Best Modes for Carrying out the Invention

Hereinafter, embodiments of the present invention are described with reference to the drawings. FIG. 1 is a partial plan view of a flywheel with a part cut away, showing an embodiment of the invention. FIG. 2 is a sectional view taken across a line A-O-A shown in FIG. 1. FIG. 3 is a view showing the flywheel shown in FIG. 2 in an exploded state.

In the drawing, a reference numeral 1 denotes a crankshaft of an internal combustion engine as an input member. A reference numeral 2 denotes a first inertial body, and this first inertial body 2 together with a bearing holder 3 is connected to the crankshaft 1 by bolts 4. A reference numeral 5 denotes a second inertial body, and this second inertial body 5 is supported rotatably relative to the first inertial body 2. Moreover, the second inertial body 5 is connectable to an unshown clutch device as an output member. A reference numeral 6 denotes dampers that couple the first inertial body 1 and the second inertial body 5 together.

The first inertial body 2 is shaped like a flat plate, and on its outer circumferential side, there is formed an annular boss 7 that extends in the axial direction toward the second inertial body 5. An auxiliary member 8 is secured to the boss 7 by bolts 9. The first inertial body 2 is further formed an annular recess 10 on the side facing the second inertial body 5. On the internal circumferential rim of the recess 10, a plurality of notches 11 opening into the recess 10, three in number in this embodiment, are formed at regular intervals along the circumference. A ring gear 13 is secured on the outer perimeter of the first inertial body 2.

The second inertial body 5 is shaped like a fiat plate, and on its inner circumferential side, there is formed an annular boss 15 that extends in the axial direction toward the first inertial body 2. An annular boss member 17 is secured to the boss 15 by bolts 18, and the inner circumferential side of the boss member 17 is supported by a bearing 19 attached to the bearing holder 3. With this arrangement, the boss member 17 is rotatable relative to the bearing holder 3. The bearing holder 3 is connected, as a unit with the first inertial body 2, to the driving shaft 1 by the bolts 4, and the second inertial body 5 is united with the boss member 17. Consequently, the second inertial body 5 is supported rotatably relative to the first inertial body 2.

An axial end 20 of the boss member 17 extends into the annular recess 10 formed in the first inertial body 2, and on the outer circumferential side of this axial end 20, a plurality of protrusions 21 projecting in the radial direction are formed at regular intervals in the circumferential direction in a manner corresponding to the notches 11. The protrusions 21 extend into the notches 11 that are formed on the inner circumferential side of the recess 10 of the first inertial body 2, and the protrusions 21 act to limit the amount of relative rotation between the first inertial body 2 and the second inertial body 5 by abutting against the side surfaces of the notches 11.

The second inertial body 5 has a clutch sliding surface 22 with which a clutch disk of an unshown clutch device contacts.

The dampers 6 coupling the first inertial body 2 and the second inertial body 5 are disposed between the first inertial body 2 and the second inertial body 5, and a plurality of the dampers 6, six of the dampers 6 in this embodiment, are arranged in the circumferential direction. Each dumper 6 has an damping device 25 for providing resistance to the relative rotation between the first inertial body 2 and the second inertial body 5, and a spring member 26 that returns the first inertial body 2 and the second inertial body 5 from a relative rotational position to a neutral position.

The damping device 25 is coupled to the second inertial body 5, and has a cylinder 27 filled with working fluid and sealed at one end, a piston rod 28 extending through the other end of the cylinder 27 in a sealing manner and protruding extractibly, a piston 29 coupled to the piston rod 28 and slidable in the cylinder 27, and a damping force generating means 30 provided as an adjunct to the piston 29. The inside of the cylinder 27 is divided into two fluid chambers 31 and 32 by the piston 29.

The above-mentioned cylinder 27 is sealed at one end, and filled with a predetermined amount of working fluid (described in detail later). On the one end side of the cylinder 27, an attaching member 36 having a through hole 35 is attached, and, through this attaching member 36, the one end side of the cylinder 27 is coupled with the second inertial body 5.

To be precise, in a manner corresponding to each damper 6, there is provided a shaft 37 straddling between the boss 15 of the second inertial body 5 and the axial end 20 of the boss member 17 attached to the boss 15. The shaft 37 is connected by inserting into the through hole 3 of the attaching member 36 attached to the cylinder 27 of the corresponding damper 6.

The above-mentioned shaft 37 is provided substantially in the axial direction of the flywheel by fixedly press-fitting one end into an attaching hole 37a formed in the axial end 20 of the boss member 17. The other end of the shaft 37 is fit in an attaching hole 37b formed in the boss 15 of the second inertial body 5.

In addition, a bush 38 is provided between the through hole 35 of the attaching member 36 and the shaft 37, so that the attaching member 36 is rotatable around the shaft 37.

The piston rod 28 penetrates, in a sealing manner, a guide member 39 provided on the other end of the cylinder 27, and protrudes outward so that it can be inserted and extracted. An attaching member 42 with a through hole 41 is attached to the protruding end of the piston rod 28, and, through this attaching member 42, the protruding end of the piston rod 28 is coupled with the first inertial body 2.

To be precise, a shaft 43 is provided, in a manner corresponding to each damper 6, to straddle between the boss 7 of the first inertial body 2 and the auxiliary member 8 attached to the boss 7. The shaft 43 is connected by insertion into the through hole 41 of the attaching member 42 attached to the piston rod 28 of the corresponding damper 6.

The shaft 43 is provided approximately in the axial direction of the flywheel, with one end being fixedly press-fitted in the attaching hole 43a formed in the boss 7 of the first inertial body 2. The other end is fit in the attaching hole 43b formed in the auxiliary member 8. The shaft 43 extends in the same direction as the shaft 37 provided on the boss member 17. The attaching hole 43b formed in the auxiliary member 8 is a through hole in this embodiment of the invention, but it may be a blind hole.

There is a bush 44 between the through hole 41 in the attaching member 42 and the shaft 43, and therefore, the attaching member 42 can rotate around the shaft 43.

The piston 29 is shaped like a disk and slidably received in the cylinder 27, dividing the inside of the cylinder 27 in the axial direction into two fluid chambers 31 and 32. The piston 29 is formed with an orifice 52 opening in the upper and lower surfaces and connecting the two fluid chambers 31 and 32. It is optional to attach a piston ring on the outer circumference of the piston 29.

The orifice 52 restrictively allows the flow of the working fluid between the two fluid chambers 31 and 32, providing flow resistance to the working fluid that exchange-flows between the two fluid chambers 31 and 32, and therefore, the orifice 52 forms a damping force generating means 30.

The working fluid filled in the cylinder 27 is liquid working oil. The amount of this working fluid (working oil) filled therein is less than the maximum volume of the two fluid chambers 31 and 32 separated by the piston 29. The remaining volume in the cylinder 27 is filled with pressurized gas such as the air or inert gas.

The spring member 26 for returning the first inertial body 2 and the second inertial body 5 from the relative rotational position to the neutral position is disposed between the piston 29 in the cylinder 27 and the guide member 39.

In this structure, the torque from the crankshaft 1 is inputted to the first inertial body 2 connected to the crankshaft 1, and transmitted from the first inertial body 2 through the dampers 6, that is, through the damping devices 25 and the spring members 26, to the second inertial body 5. In this case, the spring members 26 carry out vibration absorbing operation and the damping devices 25 carry out vibration damping operation, so that vibrations superimposed on the input torque is absorbed and damped.

To be precise, each damper 6 has the cylinder 27 connected with the second inertial body 5 through the shaft 37, and the piston rod 28 connected with the first inertial body 2 through the shaft 43. Therefore, when torque is inputted to the first inertial body 2, the first inertial body 2 and the second inertial body 5 rotate relatively from the neutral position of the relative rotation, and thereby the piston rod 28 moves in a direction out of the cylinder 27 (extending direction). When, on the other hand, they return to the neutral position from the relative rotational position, the piston rod 28 moves in a direction into the cylinder 28 (compressing direction).

When the piston rod 28 moves in the extending direction, the working fluid (working oil) exchange-flows into the fluid chamber 32 through the orifice 52. When the piston rod 28 moves in the compressing direction, the working fluid (working oil) in the chamber 32 exchange-flows into the fluid chamber 31 through the orifice 52.

In the exchange flow of the working fluid (working oil) through the orifice 52 between the two fluid chambers 31 and 32, the working fluid (working oil) is subjected to the flow resistance due to the orifice 52. As a result, a pressure difference is generated on both sides of the piston 29, and this pressure difference works as a resisting force against the movement of the piston rod 28, and provides a damping force of a predetermined magnitude.

The volume compensation in the cylinder 27, when the piston rod 28 moves in the extending direction or the compressing direction, is achieved by the expansion and compression of the pressurized gas sealed in the remaining volume in the cylinder 27.

The dampers 6 coupling the first inertial body 2 and the second inertial 5 are installed through the shafts 43 and 36 provided, respectively, in the first inertial body 2 and the boss member 17 in the following manner.

As shown in FIG. 3, in advance, one end of the shaft 37 is press-fitted and fixed in the attaching hole 37a of the boss member 17, and the bearing 19 is installed in the inner circumference of the boss member 17. The bush 38 is inserted into the through hole 35 in the attaching member 36 of the damper 6, and the bush 44 is inserted into the through hole 41 in the attaching member 42.

Then, one end of the shaft 43 is press-fitted and fixed in the attaching hole 43a in the first inertial body 2, and the boss member 17 together with the bearing holder 3 is assembled through the bearing 19, to the first inertial body 2 having the fixedly fitted shaft 43. As a result, the shaft 37 provided in the boss member 17 and the shaft 43 provided in the first inertial body 2 both extend approximately in the same axial direction.

Next, the damper 6 is attached to the shafts 37 and 43. Namely, the through hole 35 of the attaching member 36 is fitted over the shaft 37, and the through hole 41 of the attaching member 42 is fitted over the shaft 43. The shafts 37 and 43 are inserted into the through holes 35 and 41 approximately at the same time.

Next, the attaching hole 43b formed in the auxiliary member 8 is fitted over the other end of the shaft 43 on the first inertial body 2, and this auxiliary member 8 is secured to the boss 7 of the first inertial body 2 by the bolts 9. As a result, the shaft 43 is supported at both ends, which improves the strength.

Next, the attaching hole 37b formed in the second inertial body 5 is fitted over the other end of the shaft 37 on the boss member 17, and this second inertial body 5 is secured to the boss member 17 by the bolts 18. As a result, the shaft 37 is supported at both ends, which improves the strength.

Consequently, the dampers 6 couple the first inertial body 2 with the second inertial body 5, and the flywheel is thus assembled.

The shafts 43 and 37 provided, respectively on the first inertial body 2 and the boss member 17 extend approximately in the same axial direction, and therefore, the dampers 6 are easily connected to the shafts 43 and 37 from one direction. As a result, the dampers 6 are easily secured to the first inertial body 2 and the second inertial body 5.

Thus, it is possible to obtain a flywheel in which the assembly operation of the dampers 6 is easy.

Moreover, the adjustment of the damping force is easy and the structure is simple because each damper 6 has the damping device 25 that gives resistance to the relative rotation of the first inertial body 1 and the second inertial body 5, and the spring member 26 that returns the first inertial body 1 and the second inertial body 5 from the relative rotational position to the neutral position, the damping device 25 is a so-called fluid shock absorber, and the spring member 26 is positioned in the cylinder 27.

FIG. 4 and FIG. 5 are views that show another embodiment of the present invention. The difference between this embodiment and the above-mentioned embodiment resides in that one end of the cylinder 27 is coupled with the first inertial body 2 through the boss member 17 and the shaft 37, and the protruding end of the piston 28 is coupled with the second inertial body 5 through the shaft 43. Moreover, the bearing holder 3 is eliminated.

In other words, the first inertial body 2 is connected alone to the crankshaft 1 by bolts 4. The first inertial body 2 is shaped like a flat plate, and, on the inner circumferential side, there is formed a boss 15 protruding toward the second inertial body 5. The ring gear 13 is fixed to the outer circumference of the first inertial body 2.

The second inertial body 5 is shaped like a flat plate, and, on the outer circumferential side, there is formed an annular boss 7 extending in the axial direction toward the first inertial body 2, and an auxiliary member 8 is fixed to the boss 7 by bolts 9. The second inertial body 5 is formed with an annular recess 10 on the side facing the first inertial body 2, and, on the inner circumferential edge of the recess 10, there are formed a plurality of notches 11 opening to this recess 10, at regular intervals in the circumferential direction.

To the boss 15 of the first inertial body 2, an annular boss member 17 is fixed by bolts 18, and the inner circumference of this boss member 17 is supported by a bearing 19 installed in the inner circumference of the recess 10 formed on the second inertial body 5. As a result, the boss member 17 is rotatable relative to the second inertial body 5. Since the first inertial body 2 together with the boss member 17 is connected to the driving shaft 1, the second inertial body 5 is supported rotatably relative to the first inertial body 2.

The axial end 20 of the boss member 17 extends into the annular recess 10 formed in the second inertial body 5, and on the outer circumferential side of this axial end 20, there are formed a plurality of radial protrusions 21 at regular intervals in the circumferential direction in the manner corresponding to the notches 11. The protrusions 21 extend into the notches 11 formed in the inner circumference of the recess 10 of the first inertial body 2, and limit the amount of relative rotation of the first inertial body 2 and the second inertial body 5 by abutting against the side surfaces of the notches 11.

The cylinder 27 of the damper 6 is coupled with the first inertial body 2 through an attaching member 36. In other words, there is provided, in the manner corresponding to the dampers, a shaft 37 straddling between the boss 15 of the first inertial body 2 and the axial end 20 of the boss member 17 attached to this boss 15, and this shaft 37 is connected by inserting into the through hole 35 of the attaching member 36 attached to the cylinder 27 of the corresponding damper 6.

The shaft 37 is provided approximately in the axial direction of the flywheel with one end of the shaft 37 being press-fitted and fixed into the attaching hole 37a formed in the axial end 20 of the boss member 17. The other end of the shaft 37 is fitted in the attaching hole 37b formed in the boss 15 of the first inertial body 2.

The protruding end of the piston rod 28 is coupled with the second inertial body 5 through the attaching member 42. In other words, there is provided, for each damper 6, a shaft 43 straddling between the boss 7 of the second inertial body 5 and the auxiliary member 8 attached to this boss 7. This shaft 43 is connected by inserting into the through hole 41 in the attaching member 42 attached to the piston rod 28 of the corresponding damper 6.

The shaft 43 is provided approximately in the axial direction of the flywheel, with one end of the shaft 43 being press-fitted and fixed in the attaching hole 43a formed in the boss 7 of the second inertial body 5. The other end of the shaft 43 is fitted in the attaching hole 43b formed in the auxiliary member 8. The shaft 43 extends in the same direction as the shaft 37 provided on the boss member 17. The attaching hole 43b formed in the auxiliary member 8 may be a blind hole though, in this embodiment, it is a through hole in the axial direction.

As to remaining parts, the construction is approximately the same as the preceding embodiment, so that the same reference numerals are given to the corresponding constituents, and repetitive explanation is omitted.

In this construction, the dampers 6 coupling the first inertial body 2 with the second inertial body 5 are assembled through the shafts 43 and 37 provided, respectively, on the second inertial body 5 and the boss member 17 in the following manner.

As shown in FIG. 5, in advance, one end of the shaft 37 is press-fitted and fixed in the attaching hole 37a of the boss member 17, and the bearing 19 is installed in the inner circumference of the boss member 17. Also, the bush 38 is inserted into the through hole 35 in the attaching member 36 of the damper 6, and the bush 44 is inserted into the through hole 41 in the attaching member 42.

Next, one end of the shaft 43 is press-fitted into, and fixed to, the attaching hole 43a in the second inertial body 5, and the boss member 17 is attached through the bearing 19, to the second inertial body 5 having the shaft 43 being fitted and fixed. As a result, the shaft 37 provided on the boss member 17 and the shaft 43 provided on the second inertial body 5 both extend approximately in the same axial direction.

Next, the damper 6 is attached to the shafts 37 and 43. In other words, the through hole 35 of the attaching member 36 is fitted over the shaft 37, and the through hole 41 of the attaching member 42 is fitted over the shaft 43. The shafts 37 and 43 are inserted into the through holes 35 and 41 approximately at the same time.

Next, the other end of the shaft 43 on the second inertial body 5 is fitted in the attaching hole 43b formed in the auxiliary member 8, and this auxiliary member 8 is secured to the boss 7 of the second inertial body 15 by the bolts 9. As a result, the shaft 43 is supported at both ends, which improves the strength.

Next, the other end of the shaft 37 on the boss member 17 is fitted in the attaching hole 37b formed in the first inertial body 2, and the first inertial body 2 is secured to the boss member 17 by the bolts 18. As a result, the shaft 37 is supported at both ends, which improves the strength.

The first inertial body 2 and the second inertial body 5 are thus coupled by the dampers 6, and the flywheel is thus assembled.

The shafts 43 and 37 provided, respectively, on the first inertial body 2 and the boss member 17 extend approximately in the same axial direction, and therefore, the dampers 6 are easily coupled to the shafts 43 and 37 from one direction. Therefore, the dampers 6 are easily assembled to the first inertial body 2 and the second inertial body 5.

In this embodiment, too, it is possible to obtain a flywheel facilitating the assembly process of the dampers 6.

### Industrial Applicability

The present invention is not limited to the constructions of these embodiments, and variations are possible in the range not deviating from the gist of the invention. For example, the installation of the shafts 43 and 37 to either of the first inertial body 2 and the second inertial body 5 and the boss member 17 is not limited to the press fitting, but connection by screw or key is possible.

## Claims

1. In a flywheel where a first inertial body and a second inertial body rotatable relative to the first inertial body are coupled by a plurality of dampers arranged in a circumferential direction,
a flywheel characterized
in that, to one of the first inertial body and the second inertial body, a boss member connected to the other of the first inertial body and the second inertial body is attached in a manner to allow relative rotation,
in that, in one of the first inertial body and the second inertial body, and the boss member, there are, respectively, provided, in a manner corresponding to each damper, shafts extending approximately in the same axial direction,
in that both ends of the damper are coupled, respectively, to the shafts, and
in that the other of the first inertial body and the second inertial body is connected with the boss member.

2. The flywheel as recited in Claim 1, wherein each damper comprises an damping device providing resistance to the relative rotation of the first inertial body and the second inertial body, and a spring member returning the first inertial body and the second inertial body from a relative rotational position to a neutral position,
the damping device comprises a cylinder that is coupled to one shaft, filled with working fluid, and sealed at one end, a piston rod that passes through the other end of the cylinder in a sealing manner and projects extractibly and that is coupled with the other shaft, a slidable piston that is coupled to the piston rod and that divides the inside of the cylinder into two fluid chambers, and a damping force generating means provided as an adjunct to the piston, and
the spring member is positioned in the cylinder.
